## Europäisches Patentamt

(19) **European Patent Office**

**Office européen des brevets**

(11) Numéro de publication: **0 130 896**

**B1**

(12)

# FASCICULE DE BREVET EUROPÉEN

(45) Date de publication du fascicule du brevet:
27.04.88

(51) Int. Cl.⁴: **B 62 K 19/40,** B 62 K 19/38,
B 62 M 25/04, B 62 M 9/12

(21) Numéro de dépôt: **84401319.3**

(22) Date de dépôt: **22.06.84**

(54) **Dispositif de fixation d'un accessoire sur un cycle.**

(30) Priorité: **01.07.83 FR 8311018**

(43) Date de publication de la demande:
**09.01.85 Bulletin 85/2**

(45) Mention de la délivrance du brevet:
**27.04.88 Bulletin 88/17**

(84) Etats contractants désignés:
**BE DE GB IT LU NL**

(56) Documents cité:
**CH-A-427 539**
**DE-C-936 795**
**FR-A-1 284 252**

(73) Titulaire: **SACHS- HURET S.A., 60, Avenue Félix Faure, F-92000 Nanterre (FR)**

(72) Inventeur: **Huret, Gérard, 3 Villa Marcelle, F-92000 Nanterre (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1988

## Description

La présente invention concerne le montage et la fixation d'accessoires de cycles, tels que, par exemple, dérailleurs avant et arrière, manettes d'actionnement de ces dérailleurs, freins, etc.

On sait que pour fixer notamment des manettes de commande de dérailleurs, on utilise des colliers. Certains de ces colliers sont obtenus à partir d'un flan en tôle formé de façon à délimiter le collier proprement dit et deux oreilles nervurées et perforées, dans lesquelles vient s'engager un boulon de serrage du collier. D'autres colliers sont réalisés en deux parties reliées par une charnière, par exemple pour le montage de dérailleurs avant. Dans tous les cas, ce type de fixation pose des problèmes importants au montage car la mise en place du collier n'est pas toujours facile et il faut ensuite assurer le serrage du collier au moyen d'une vis et d'un écrou, ce qui constitue une opération relativement longue. De plus, s'il est mal serré, ou bien après une certaine période d'utilisation, le collier risque de glisser de sorte qu'il est en général nécessaire de prévoir sur le cadre du cycle un plot brasé, dont la fonction est de servir de butée et d'assurer le maintien du collier dans la position choisie. Ces colliers, qu'ils soient d'une seule pièce ou articulés, constituent par ailleurs des pièces chères, compte tenu de la quantité de matières nécessaires, des opérations de formage et de la visserie utilisée pour leur serrage.

On a également proposé de monter les manettes de dérailleurs sur des plots fixés par brasage de part et d'autre du cadre. Ces plots délimitent une embase pour le montage de la manette et sont munis d'un filetage femelle dans lequel vient s'engager une vis de fixation. Ce type de fixation est esthétiquement plus satisfaisant mais présente également certains inconvénients spécifiques c'est ainsi qu'il nécessite la fourniture au constructeur de cycles, d'une manette montée sur un faux plot en matière plastique, qui doit être démonté au moment de la mise en place de la manette sur le plot brasé, ce qui présente un risque de décalage des éléments constitutifs de la manette ou même de chute et de perte de l'un de ces éléments. Cette manipulation est en effet délicate et complique l'opération de montage de la manette sur le plot. Par ailleurs, chaque plot est adapté à un certain type de manette et des difficultés d'adaptation existent lorsqu'on souhaite monter des manettes de types différents.

Le document DE-A-936 795 qui correspond au préambule de la revendication 1 décrit un véhicule à moteur dont le réservoir de carburant est fixé à cheval sur un tube du cadre. Cette fixation est réalisée, d'une part, au moyen d'une première patte portée par le réservoir et qui s'engage dans un étrier porté par le tube et, d'autre part, au moyen d'une deuxième patte solidaire du réservoir et qui est serrée sur le tube par un collier. Dans cet agencement, la fixation est en fait réalisée nar le collier, la première patte et l'étrier n'ayant qu'une fonction de retenue de la partie supérieure du réservoir. Un tel dispositif de fixation demeure par conséquent complexe et n'apporte pas d'élément de solution, notamment lorsque l'accessoire joue un rôle actif et supporte des efforts, lors de l'utilisation du cycle, ce qui n'est pas le cas d'un réservoir.

Le document CH-A-427 539 décrit, dans l'une de ses variantes, le montage d'une béquille sur un cycle, réalisé au moyen de deux pièces complémentaires, en forme de tronc, de cône ou de pyramide, portées respectivement par le cadre et la béquille elle-même. Cependant, le blocage des deux pièces n'est pas positif de sorte que ce type de fixation ne convient pas dans le cas d'un accessoire soumis, en cours d'utilisation, à des efforts.

Le problème que l'invention se propose de résoudre est le suivant fournir un dispositif de fixation d'accessoires de cycles, qui soit plus simple que les dispositifs existants et qui permette de simplifier les opérations de montage, en particulier en autorisant la fourniture de l'accessoire prêt à être monté.

L'invention a donc pour objet un dispositif de fixation d'un accessoire sur un cycle, caractérisé en ce qu'il comprend un support sur lequel est monté ledit accessoire, ce support et la partie du cycle sur laquelle il est fixé comportantdeux pièces complémentaires respectivement mâle et femelle, conformées de façon à être rendues solidaires par coincement, l'agencement étant tel que, lorsqu'un effort est exercé sur l'accessoire, en cours d'utilisation, cet effort tend à augmenter le coincement entre la pièce mâle et la pièce femelle qui constituent exclusivement les moyens de fixation du support sur le cycle.

Suivant d'autres caractéristiques :
- le support comporte deux branches latérales adaptées pour recevoir chacune une manette de commande de dérailleur;
- la pièce mâle est venue de matière avec le support et cette pièce mâle est constituée par une patte obtenue par crevé dudit support;

L'invention va être décrite plus en détail ci-dessous en se référant aux dessins annexés donnés uniquement à titre d'exemples et sur lesquels :
- la fig. 1 est une vue en perspective éclatée d'une manette double de commande de dérailleurs, montée conformément à l'invention;
- la fig. 2 est une vue en perspective représentant simplement le support de manette et le pontet destiné à être fixé sur le cadre;
- la fig. 3 est une vue en élévation montrant le support en place sur le cadre;
- la fig. 4 est une vue analogue à celle de la fig. 1 d'une variante représentant le montage d'une manette simple;
- la fig. 5 est une vue en perspective du support de la fig. 4, dans une autre position;
- la fig. 6 est une vue en perspective montrant le montage d'un frein arrière;
- la fig. 7 est une vue en perspective montrant un dérailleur avant porté par un support suivant l'invention;

- la fig. 8 représente en perspective le support de la fig. 7 et le pontet de fixation sur le cadre;
- la fig. 9 représente un exemple de montage d'un dérailleur arrière;
- la fig. 10 représente un autre exemple de montage d'un dérailleur arrière;
- la fig. 11 est une vue en perspective éclatée correspondant à l'agencement de la fig. 10.

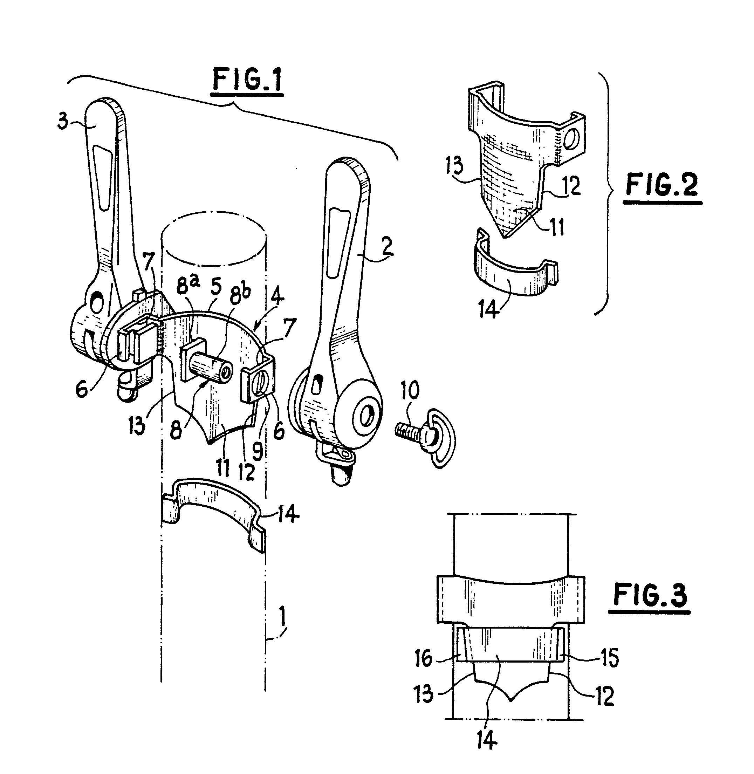

On voit sur la fig. 1 un montant 1 de cadre de cycle, représenté en trait mixte, ainsi qu'un ensemble de deux manettes 2, 3 destinées à commander respectivement un dérailleur arrière et un dérailleur avant.

Suivant l'invention, ces deux manettes sont portées par un support 4 comportant une partie centrale 5 incurvée pour épouser la forme du tube constituant le cadre, prolongée par deux branches latérales 6 délimitant d'une part, un logement 7, par exemple de forme carrée, pour recevoir la tête 8ª d'un plot 8 de fixation de la manette, et d'autre part, un orifice 9 permettant le passage du fût 8ᵇ de ce plot. Chaque manette est fixée sur le plot correspondant au moyen d'une vis 10.

Le support des deux manettes comporte, venue de matière, une patte 11 dirigée vers le bas, qui épouse également la forme du tube et dont les deux côtés 12, 13 convergent légèrement l'un vers l'autre de quelques degrés, par exemple de 5° chacun par rapport à la direction parallèle à l'axe du tube 1.

Cette partie est destinée à venir s'engager dans un logement de forme correspondante délimité d'une part, par le tube et, d'autre part, par un pontet 14 en U ou en Ω brasé sur ce tube. Le pontet est de préférence ouvert à sa partie inférieure pour permettre le dépassement de la partie inférieure de la patte 11 et il comporte deux parois latérales 15, 16 qui convergent également, à peu près suivant le même angle que celui des côtés 12, 13 de la patte, comme cela est visible sur la fig. 3.

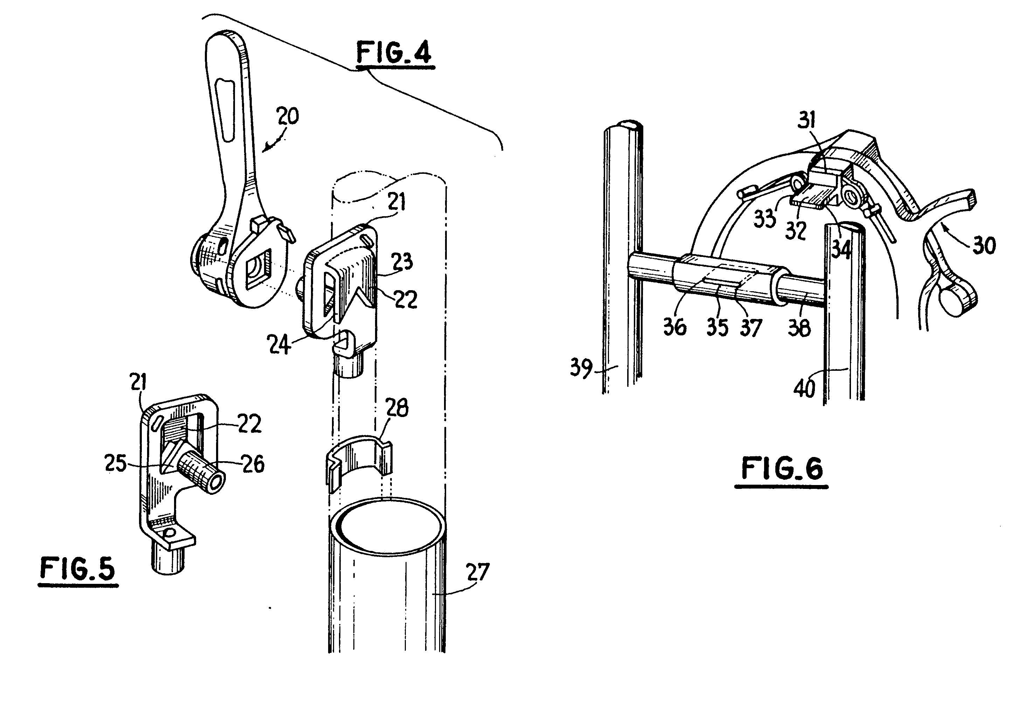

Aux fig. 4 et 5, est représenté le montage d'une manette simple 20 d'actionnement d'un dérailleur avant ou arrière. Cette manette est portée par un support 21 dans lequel est formée par crevé une patte 22 qui correspond dans sa fonction à la patte 11 des fig. 1 à 3. C'est ainsi que cette patte présente une courbure correspondant à celle du tube sur lequel elle est fixée et comporte deux bords latéraux 23, 24 qui convergent légèrement l'un vers l'autre, par exemple du même angle de deux fois 5° comme dans le mode de réalisation précédent. De plus, cette patte est découpée de façon à laisser subsister sur le support une partie centrale 25 de surface suffisamment importante sur laquelle est brasé ou fixé de toute autre façon un plot 26 de montage pour la manette. Dans l'exemple représenté, la découpe ainsi formée dans le support a une forme générale en M.

Sur le tube 27 du cadre est fixé comme dans l'exemple précédent un pontet 28 destiné à délimiter avec le tube le logement dans lequel vient s'engager et se coincer la patte 22; les parois latérales de ce pontet convergent d'un angle à peu près égal à celui que forment entre eux les bords de la patte 22.

On notera que dans le cas des deux réalisations décrites ci-dessus, la traction exercée par le câble, en utilisation, et qui est de l'ordre de 20 kg sollicite le support dans une direction qui tend à augmenter le coincement, assurant ainsi un très bon maintien sur le cadre.

A la Fig. 6 est représenté le montage d'un frein arrière 30. Ce frein est fixé sur un support 31 qui comporte à sa partie avant une patte de fixation 32 de forme plane et dont les deux bords longitudinaux 33, 34 convergent comme dans le cas des exemples précédents. Cette patte est destinée à venir s'engager dans un logement 35 de forme correspondante, c'est-à-dire dont les deux côtés longitudinaux 36, 37 sont également convergents et qui est ménagé dans une entretoise 38, éventuellement renforcée, s'étendant entre deux haubans 39, 40' du cadre. Dans ce mode de réalisation, l'effort supporté par le frein en cours d'utilisation et transmis à son support a pour effet de tendre à engager encore davantage la patte 32 dans son logement et par conséquent à accroître le coincement entre ces deux éléments. Le frein ne risque donc pas de se dégager.

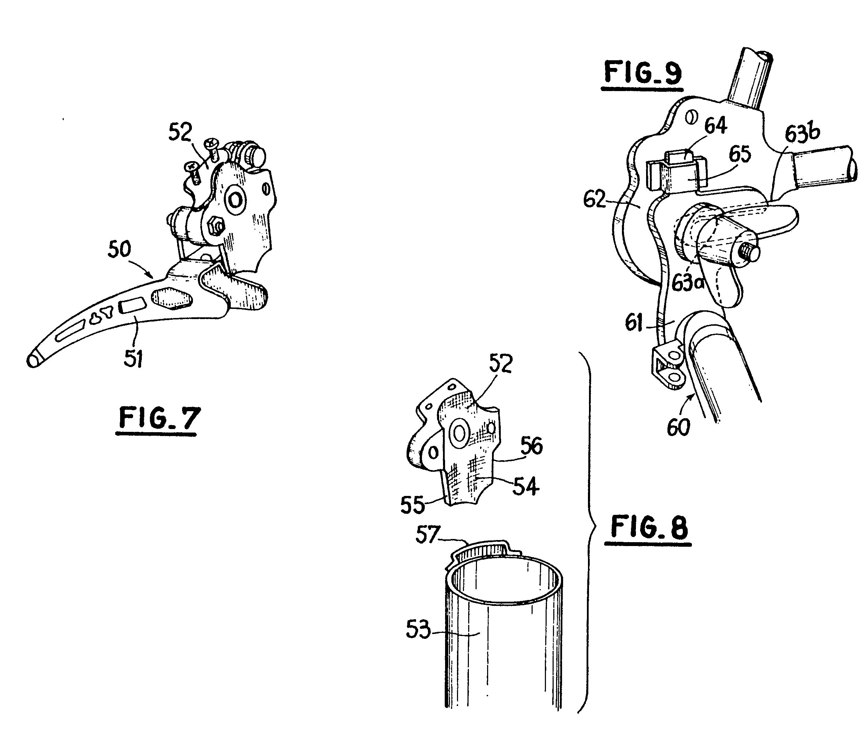

Aux Fig. 7 et 8 est représenté un dispositif de montage d'un dérailleur avant 50 ou dérailleur de pédalier. Ce dérailleur comprend, de façon classique, une chape 51 reliée à un support 52 par un mécanisme d'articulation qui ne sera pas décrit en détail et qui peut être du type constitué par un parallélogramme déformable.

Le support 52 que l'on voit plus clairement à la Fig. 8 a une forme incurvée, avec un profil correspondant à celui du tube 53 sur lequel il est fixé. Ce support est prolongé vers le bas par une patte 54 qui est tout-à-fait semblable à celle du support représenté aux Fig. 1 à 3. Cette patte comporte donc deux côtés 55, 56 qui convergent légèrement l'un vers l'autre. Elle est destinée à être reçue dans un logement délimité d'une part, par le tube 53 et, d'autre part, par un pontet 57 brasé sur ce tube. A cet effet, le pontet comporte deux côtés légèrement convergents, par exemple sur un angle de 5° par rapport à la direction parallèle à l'axe du tube. Là encore la traction exercée par le cable d'actionnement du dérailleur participe au maintien du support par rapport au cadre, malgré l'absence de collier.

Sur la Fig. 9 est représenté le montage d'un dérailleur arrière 60. Ce dérailleur est porté par une plaque support 61 elle-même fixée sur une patte de cadre 62. La plaque support comporte une fente 63a destinée à venir à peu près en coïncidence avec la fente 63b ménagée dans la patte de cadre et dans laquelle se fixe l'axe de la roue arrière. Par ailleurs, cette plaque support comporte une patte 64 s'étendant vers le haut à peu près à angle droit par rapport à la direction de la fente 63a. Cette patte est destinée à être reçue dans un logement delimité par la patte de cadre et un pontet 65 brasé sur cette patte ou bien réalisé par crevé. Comme précédemment, ce pontet délimite de préférence un logement de forme convergente et la patte présente une forme correspondante de façon à réaliser un certain coincement de la plaque support par rapport à la patte de cadre.

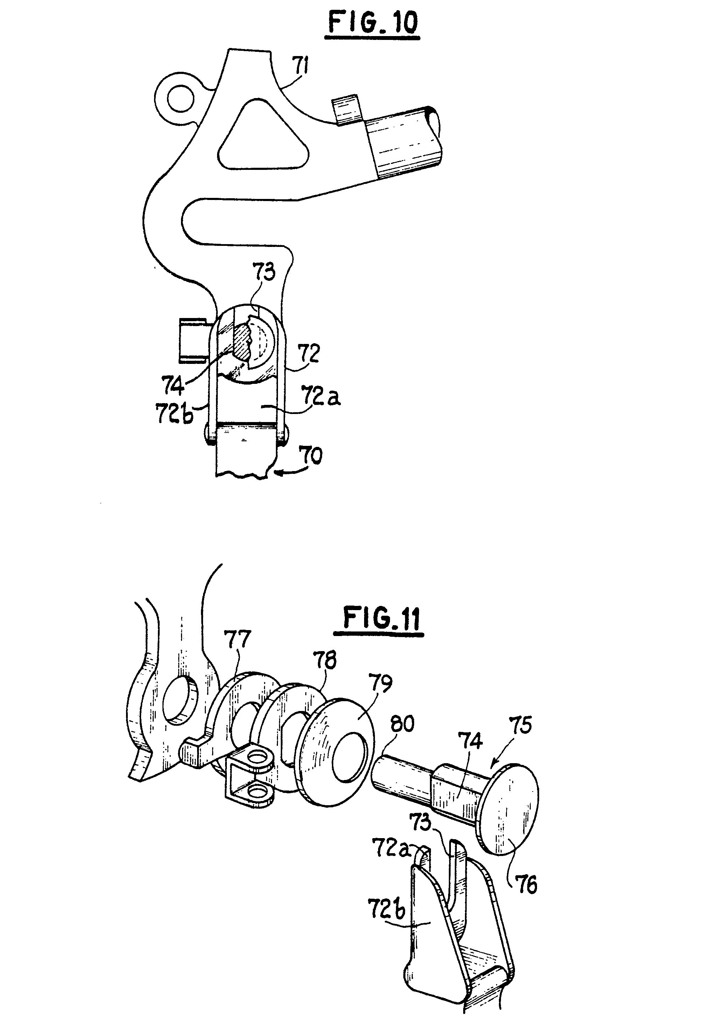

Aux Fig. 10 et 11 est représenté un autre mode de réalisation d'une fixation d'un dérailleur 70 sur une patte de cadre 71. Ce dérailleur comporte une pièce supérieure 72 constituant l'un des côtés d'un parallélogramme ou d'un quadrilatère articulé, sur laquelle sont articulés les deux côtés longitudinaux de ce parallélogramme ou de ce quadrilatère. La pièce 72 comporte un fond 72ª et deux parois latérales 72ᵇ. C'est entre ces deux parois latérales que sont articulés les deux côtés longitudinaux du parallélogramme. Le fond 72ª comporte une échancrure 73 ouverte à sa partie supérieure, qui est destinée à venir s'engager sur les deux faces méplates 74 de la tige d'un organe de fixation 75. Entre la tête 76 de cet organe de fixation et la patte de cadre sont disposées une première rondelle de butée 77, une deuxième rondelle 78 délimitant une butée pour la gaine du câble d'actionnement, et une rondelle élastique 79. Après montage l'organe de fixation est, de préférence, riveté sur la patte de cadre, l'extrémité 80 de la tige de cet organe de fixation étant alors épanouie pour constituer la tête du rivet. Bien entendu, un coincement peut être réalisé entre les bords de l'échancrure 73 et les faces méplates 74 de l'organe de fixation 75.

Le dérailleur est alors monté par simple engagement sur l'organe de fixation 75, ce montage s'effectuant en comprimant suffisamment la rondelle élastique 79, pour que le dérailleur soit correctement fixé.

Dans les agencements des Fig. 9, 10 et 11, la réaction exercée par le système de tension de chaîne situé à la partie inférieure du dérailleur est dirigée vers le haut et tend à engager la patte 64 dans le logement 65 et la pièce 72 sur l'organe de fixation 75 évitant ainsi tout risque de démontage intempestif.

Dans tous les modes de réalisation représentés et décrits ci-dessus, le dispositif de montage suivant l'invention offre des avantages notables par rapport aux dispositifs classiques. C'est ainsi que dans tous les cas les avantages suivants sont obtenus :

- les accessoires en question peuvent être livrés entièrement montés au constructeur de cycles, qui n'a plus qu'à les engager dans les pontets ou autres logements prévus sur le cadre du cycle. Cette opération simple de montage est extrêmement avantageuse par rapport à celle qui nécessite des opérations de dévissage et de vissage, non seulement en ce qui concerne le temps gagné au montage, mais également la sécurité et la fiabilité de ce montage puisqu'aucun risque de perte de pièces n'est à craindre. Le brasage des pontets ou autres pièces équivalentes s'effectue en même temps que les autres brasures déjà prévues sur le cadre et ne constitue donc pas une opération supplémentaire;

- dans tous les cas, l'accessoire maintenu par coincement est soumis, en fonctionnement, à un effort qui tend à augmenter ce coincement, de sorte que le montage réalisé est très sûr;

- le démontage reste cependant plus simple que dans les dispositifs antérieurs puisque, là encore, aucun dévissage n'est nécessaire;

- les moyens de fixation sont simplifiés par rapport aux dispositifs connus, le nombre de pièces est réduit et l'esthétique de l'ensemble s'en trouve améliorée, en laissant dégagées des portions du cadre qui sont habituellement recouvertes par des colliers, puisque notamment dans le cas des manettes et du dérailleur avant le supportet sa patte de fixation ne recouvrent qu'une partie de la périphérie du tube et laissent donc le cadre apparent sur la plus grande partie de sa périphérie.

Bien entendu, d'autres variantes peuvent être envisagées; on peut par exemple fixer également un frein avant au moyen d'une patte verticale reçue dans un logement porté par la fourche avant, dans la mesure où cette fourche comporte une partie de hauteur suffisante pour permettre la mise en place et le dégagement de ladite patte.

Suivant une autre caractéristique, les moyens de coincement entre les deux parties mâle et femelle peuvent comprendre des crans et/ou des moyens d'encliquetage pour améliorer la tenue.

## Revendications

1. Dispositif de fixation d'un accessoire (2, 3 ; 20; 30 ; 50; 60; 70) sur un cycle, cet accessoire étant soumis, en cours d'utilisation, à un effort exercé dans une direction déterminée, caractérisé en ce qu'il comprend un support (4; 21; 31; 52; 61; 72; 90) sur lequel est monté ledit accessoire, ce support et la partie du cycle (1; 27; 38; 53; 62; 71; 91) sur laquelle il est fixé comportant deux pièces complémentaires (11; 14; 22; 28; 32; 35; 54; 57; 64; 65; 73; 74; 92; 93) respectivement mâle et femelle, conformées de façon à être rendues solidaires par coincement, l'agencement étant tel que l'effort exercé sur l'accessoire, en cours d'utilisation, tend à augmenter le coincement entre la pièce mâle et la pièce femelle qui constituent exclusivement les moyens de fixation du support sur le cycle.

2. Dispositif suivant la revendication 1, caractérisé en ce que la pièce mâle est venue de matière avec le support et cette pièce mâle est constituée par une patte (22) obtenue par crevé dudit support (21).

3. Dispositif suivant la revendication 1, caractérisé en ce que le support (4) comporte deux branches latérales (6) adaptées pour recevoir chacune une manette (2, 3) de commande de dérailleur.

4. Dispositif suivant la revendication 1, caractérisé en ce que le support est adapté pour recevoir une manette (20) de commande de dérailleur et comprend une plaque (21) dans laquelle est formée, par crevé, la patte de fixation (22), cette patte étant découpée de façon à laisser subsister sur la plaque une partie centrale (25) portant un plot de montage pour la manette.

5. Dispositif suivant la revendication 1, caractérisé en ce que l'accessoire est un frein arrière (30), du type à étrier, le support (31) comportant une patte (32) qui s'étend à peu près perpendiculairement au plan de l'étrier, vers l'avant, en position montée sur le cycle, cette patte étant reçue dans un logement (35) ménagée dans une entretoise (38) entre deux haubans (39, 40) du cadre du cycle.

6. Dispositif suivant la revendication 1, caractérisé en ce que l'accessoire est un dérailleur avant (50) ou dérailleur de pédalier.

7. Dispositif suivant la revendication 1, caractérisé en ce que l'accessoire est un dérailleur arrière (60) et le support comprend une plaque (61) délimitant une patte (64) reçue dans un logement (65) porté par une patte de cadre (62).

8. Dispositif suivant la revendication 7, caractérisé en ce que le support (61) délimite une fente (63) dans laquelle s'étend l'axe de la roue arrière du cycle.

9. Dispositif suivant la revendication 1, caractérisé en ce que l'accessoire est un dérailleur arrière et le support delimite une échancrure (73) coopérant avec un rivet de fixation ou analogue (75) et avec un organe élastique (79) agissant axialement par rapport audit organe de fixation.


**Patentansprüche**

1. Vorrichtung zur Befestigung eines bei seiner Benutzung einer in einer vorbestimmten Richtung wirkenden Kraft ausgesetzten Zubehörteils (2, 3; 20; 30; 50; 60; 70) an einem Fahrrad, dadurch gekennzeichnet,

daß die Vorrichtung einen Träger (4; 21; 31; 52; 61; 72; 90) aufweist, an dem das Zubehörteil montiert ist,

daß dieser Träger und der Fahrradteil (1; 27; 38; 53; 62; 71; 90), an dem er befestigt ist, zwei zueinander komplementäre Stücke (11; 14; 22; 28; 32; 35; 54; 57; 64; 65; 73; 74; 92; 93), nämlich ein Vaterteil und ein Mutterteil, umfassen, die so ausgestaltet sind, daß sie durch Verkeilen miteinander fest verbunden sind, wobei die Anordnung so getroffen ist, daß die während der Benutzung auf das Zubehörteil einwirkende Kraft die Verkeilung zwischen dem Vaterteil und dem Mutterteil zu vergrößern bestrebt ist,

und daß ausschließlich das Vaterteil und das Mutterteil die Mittel zur Befestigung des Trägers an dem Fahrrad bilden.

2. Vorrichtung nach Anspruch 1, dadurch gekennzeichnet, daß das Vaterteil einstückig mit dem Träger (21) ausgebildet ist und aus einem Lappen (22) besteht, der durch Herausbrechen aus dem Träger gewonnen ist.

3. Vorrichtung nach Anspruch 1, dadurch gekennzeichnet, daß der Träger (4) zwei Seitenarme (6) zur Aufnahme jeweils einer Bedienungshandhabe (2, 3) für Kettenumwerfer besitzt.

4. Vorrichtung nach Anspruch 1, dadurch gekennzeichnet, daß der Träger zur Aufnahme einer Bedienungshandhabe (20) für Kettenumwerfer dient und eine Platte (21) besitzt, in der durch Herausbrechen ein Befestigunglappen (22) ausgebildet ist, der derart geschnitten ist, daß an der Platte ein zentraler Teil (25) verbleibt, der einen Stift zur Montage der Bedienungshandhabe trägt.

5. Vorrichtung nach Anspruch 1, dadurch gekennzeichnet, daß das Zubehörteil eine Hinterrad-Felgenbremse ist und daß der Träger (31) einen Lappen (32) aufweist, der nach der Montage an dem Fahrrad annähernd senkrecht zur Ebene des Bremsbügels nach vorn ragt und in eine Aufnahme eingesetzt ist, die in einer zwischen zwei Ständerteilen (39, 40) des Fahrradrahmens angeordneten Querstrebe (38) angebracht ist.

6. Vorrichtung nach Anspruch 1, dadurch gekennzeichnet, daß das Zubehörteil ein vorderer oder Antriebszahnkranz-Kettenumwerfer (50) ist.

7. Vorrichtung nach Anspruch 1, dadurch gekennzeichnet, daß das Zubehörteil ein hinterer Kettenumwerfer (60) und daß der Träger eine Platte (61) aufweist, an der ein Lappen (61) ausgebildet ist, der in eine von einem Rahmenlappen (62) getragenen Aufnahme (65) eingesetzt ist.

8. Vorrichtung nach Anspruch 7, dadurch gekennzeichnet, daß der Träger (61) einen Schlitz (63) aufweist, in den sich die Hinterradachse erstreckt.

9. Vorrichtung nach Anspruch 1, dadurch gekennzeichnet, daß das Zubehörteil ein hinterer Kettenumwerfer ist und daß der Träger einen bogenförmigen Ausschnitt (73) besitzt, der mit einem Befestigungsniet (75) oder dergleichen und mit einem elastischen Organ (79) zusammenwirkt, das in axialer Richtung des genannten Befestigungsorgans wirksam ist.


**Claims**

1. A device for fixing an accessory (2, 3; 20; 30; 50; 60; 70) to a cycle, such accessory being subjected during use to a force exerted in a predetermined direction, characterized in that it comprises a support (4; 21; 31; 52; 61; 72; 90) on which the accessory is mounted, the support and the part of the cycle (1; 27; 38; 53; 62; 71; 91) to which it is fixed comprising two complementary, respectively male and female members (11; 14; 22; 28; 32; 35; 54; 57; 64; 65; 73; 74; 92; 93) adapted to be connected to one another by wedging, the arrangement being such that the force exerted on the accessory during use tends to increase the wedging between the male member and the female member, which form the sole means of fixing the support to the cycle.

2. A device according to claim 1, characterized in that the male member in made in one piece with the support and formed by a tab (22) obtained by a shearing and deforming operation carried out on the support (21).

3. A device according to claim 1, characterized in that the support (4) comprises two lateral branches (6) each of which is adapted to receive a lever (2, 3) for controlling a derailleur.

4. A device according to claim 1, characterized in that the support is adapted to receive a lever (20) for controlling a derailleur and comprises a plate (21) in which the fixing tab (22) is formed by a shearing and deforming operation, the tab being so cut out as to leave on the plate a central portion (25) bearing a stud for the mounting of the lever.

5. A device according to claim 1, characterized in that the accessory is a rear brake (30) of caliper type, the support (31) comprising a tab (32) extending in its position mounted on the cycle forwardly and substantially perpendicularly to the plane of the caliper, the tab being received in a recess (35) formed in a strut (38) between two stays (39, 40) of the cycle frame.

6. A device according to claim 1, characterized in that the accessory is a front (50) or chain wheel derailleur.

7. A device according to claim 1, characterized in that the accessory is a rear derailleur (60) and the support comprises a plate (61) bounding a tab (64) received in a recess (65) borne by a lug (62) of the frame.

8. A device according to claim 7, characterized in that the support (61) bounds a slot (63) in which the axis of the cycle rear wheel extends.

9. A device according to claim 1, characterized in that the accessory is a rear derailleur and the support bounds a notch (73) cooperating with a fixing rivet or the like (75) and a resilient member (79) which acts axially in relation to the fixing member.

## FIG.1

## FIG.2

## FIG.3

FIG.6

FIG.4

FIG.5

FIG.9

FIG.8

FIG.7

# FIG. 10

71

73

74

72

72a

72b

70

# FIG. 11

77

78

79

80

74

75

73

72a

72b

76